# EUROPÄISCHE PATENTANMELDUNG

(11) **EP 3 345 804 A1**
(43) Veröffentlichungstag der Anmeldung: **11.07.2018**
(21) Anmeldenummer: 17150460.8
(22) Anmeldetag: 05.01.2017
(51) Int. Cl.: B61D 13/00, B60D 5/00, B61G 5/02

(54) **DACHGELENK FÜR EIN MEHRGLIEDRIGES FAHRZEUG**

(71) Anmelder: ATG Autotechnik GmbH, 22962 Siek (DE)
(72) Erfinder: Browne, Denis, 22946 Trittau (DE)
(74) Vertreter: Glawe, Delfs, Moll

(57) **Zusammenfassung**

Die Erfindung betrifft ein Dachgelenk für ein mehrgliedriges Fahrzeug mit einer Zentralkonsole (19) zum Befestigen an einem ersten Wagen (12) und mit zwei Seitenkonsolen (20, 21) zum Befestigen an einem zweiten Wagen (11). Ein Umlenkhebel (22) ist an der Zentralkonsole (19) um eine Drehachse (23) schwenkbar gelagert ist. Eine erste Lenkstange (24) erstreckt sich zwischen dem Umlenkhebel (22) und der ersten Seitenkonsole (20), eine zweite Lenkstange (28) erstreckt sich zwischen dem Umlenkhebel (22) und der zweiten Seitenkonsole (21). Die erste Lenkstange (24) ist vor der Drehachse (23) an dem Umlenkhebel (22) angeschlagen. Die zweite Lenkstange (28) ist hinter der Drehachse (23) an dem Umlenkhebel (22) angeschlagen. Das erfindungsgemäße Dachgelenk kann Drehbewegungen und Nickbewegungen aufnehmen, ist aber gegenüber Wankbewegungen steif.

## Beschreibung

Die Erfindung betrifft ein Dachgelenk für eine gelenkige Verbindung zwischen einem ersten Wagen und einem zweiten Wagen eines mehrgliedrigen Fahrzeugs.

Ein mehrgliedriges Fahrzeug, bei dem das Dachgelenk zum Einsatz kommen kann, kann beispielsweise eine mehrere Wagen umfassende Straßenbahn sein. In Betracht kommen auch andere schienengebundene Fahrzeuge oder straßengebundene Fahrzeuge wie Gelenkbusse. Die Wagen des Fahrzeugs können so miteinander verbunden sein, dass ein Durchgang zwischen den Wagen besteht, den die Passagiere während der Fahrt nutzen können. Die Fahrzeuge sind durch eine unterhalb des Durchgangs angeordnete Kupplung miteinander verbunden. Die Kupplung hält die Wagen in einem festen Abstand zueinander und bildet einen zentralen Drehpunkt für die Relativbewegungen zwischen den Wagen.

Oberhalb des Durchgangs kann ein Dachgelenk vorgesehen sein, das dazu bestimmt ist, mit der unterhalb des Durchgangs liegenden Kupplung zusammenzuwirken. Durch die Gestaltung des Dachgelenks wird insbesondere festgelegt, welche Relativbewegungen zwischen den Wagen des mehrgliedrigen Fahrzeugs möglich sind. Das erfindungsgemäße Dachgelenk ist so ausgelegt, dass es Drehbewegungen und Nickbewegungen zulässt, während Wankbewegungen ausgeschlossen sind (wanksteifes Dachgelenk).

Bekannt sind wanksteife Dachgelenke, bei denen im Dachbereich eine scherenartige Konstruktion ausgebildet ist, DE 1 042 391 A, EP 0 983 931 A2. Die scherenartige Konstruktion nimmt die Längenänderungen auf, die bei Nickbewegungen im Dachbereich auftreten. Quer dazu sind die scherenartigen Konstruktionen steif, so dass Wankbewegungen zwischen den Fahrzeugen nicht möglich sind. Die scherenartigen Konstruktionen sind mechanisch aufwändig und umfassen viele bewegliche Teile.

Zu unterscheiden sind solche wanksteifen Dachgelenke von Konstruktionen, bei denen ein Stab von fester Länge sich unter einem kleinen Winkel zur Querrichtung von einem festen Anlenkpunkt an dem ersten Wagen zu einem festen Anlenkpunkt an dem zweiten Wagen erstreckt (Panhardstab). Bei solchen Konstruktionen geht die Nickbewegung mit einer erzwungenen Wankbewegung einher, was zu einer unerwünschten Destabilisierung des mehrgliedrigen Fahrzeugs führen kann.

Der Erfindung liegt die Aufgabe zugrunde, ein wanksteifes Dachgelenk vorzustellen, das einfach im Aufbau und kostengünstig in der Herstellung ist. Ausgehend vom genannten Stand der Technik wird die Aufgabe gelöst mit den Merkmalen des Anspruchs 1. Vorteilhafte Ausführungsformen sind in den Unteransprüchen angegeben.

Das erfindungsgemäße Dachgelenk umfasst eine Zentralkonsole zum Befestigen an einem ersten Wagen sowie zwei Seitenkonsolen zum Befestigen an einem zweiten Wagen des mehrgliedrigen Fahrzeugs. Ein Umlenkhebel ist an der Zentralkonsole um eine Drehachse schwenkbar gelagert. Eine erste Lenkstange erstreckt sich zwischen dem Umlenkhebel und der ersten Seitenkonsole. Eine zweite Lenkstange erstreckt sich zwischen dem Umlenkhebel und der zweiten Seitenkonsole. Die erste Lenkstange ist vor der Drehachse an dem Umlenkhebel angeschlagen. Die zweite Lenkstange ist hinter der Drehachse an dem Umlenkhebel angeschlagen.

Die Erfindung hat erkannt, dass die vor und hinter der Drehachse des Umlenkhebels angeschlagenen Lenkstangen bei einer Nickbewegung der Wagen mit übereinstimmender Drehrichtung auf den Umlenkhebel einwirken. Der Umlenkhebel wird dadurch bei einer Nickbewegung gedreht, so dass die Abstandsänderung zwischen den beiden Seitenkonsolen und der Zentralkonsole aufgenommen wird. Die Abstandsänderung wird aufgenommen, ohne dass eine Querbewegung zwischen den Wagen auftritt. Hingegen führen Kräfte in Querrichtung zu zwei Drehmomenten auf den Umlenkhebel, die einander entgegengesetzt sind. Die Drehmomente gleichen sich aus, so dass der Umlenkhebel in seiner Drehposition bleibt und das Dachgelenk steif gegenüber Wankbewegungen ist. Mit der Erfindung wird demnach ein Dachgelenk vorgestellt, das bei einfachem Aufbau Nickbewegungen zulässt, jedoch gegenüber Wankbewegungen steif ist.

Ein Dachgelenk im Sinne der Erfindung ist ein Fahrzeuggelenk, das in einem Abstand zu der den zentralen Drehpunkt bildenden Kupplung angeordnet ist. Regelmäßig ist die Kupplung unterhalb eines für die Passagiere bestimmten Durchgangs angeordnet und das Dachgelenk oberhalb des Durchgangs, also im Dachbereich des Fahrzeugs.

Als Konsole wird ein Element bezeichnet, das dazu bestimmt ist, fest mit einem der Wagen des mehrgliedrigen Fahrzeugs verbunden zu werden. Die Konsole bildet dann eine vorspringende Struktur, an der bewegliche Teile des Dachgelenks aufgehängt sind. Die Zentralkonsole ist bezogen auf eine in Längsrichtung ausgerichtete senkrechte Ebene zwischen den beiden Seitenkonsolen angeordnet. Eine der Lenkstangen erstreckt sich ausgehend von dieser Ebene in die eine Richtung zu der ersten Seitenkonsole, die andere Lenkstange erstreckt sich ausgehend von dieser Ebene in die andere Richtung zu der zweiten Seitenkonsole. In einer bevorzugten Ausführungsform ist die Zentralkonsole mit einer Längs-Mittelachse des mehrgliedrigen Fahrzeugs ausgerichtet und sind die Seitenkonsolen auf zwei unterschiedlichen Seiten der Längs-Mittelachse angeordnet.

Bei den beiden Seitenkonsolen kann es sich um getrennte Bauteile handeln, die separat voneinander mit dem Wagen verbunden werden. Möglich ist auch, dass das Dachgelenk ein Strukturbauteil umfasst, an dem beide Seitenkonsolen ausgebildet sind. Das Strukturbauteil kann einen Querträger umfassen, der sich zwischen den Seitenkonsolen erstreckt und die Seitenkonsolen miteinander verbindet. Das Strukturbauteil kann so angeordnet sein, dass es die Längs-Mittelebene des Dachgelenks schneidet.

Als Drehbewegung wird eine Bewegung zwischen zwei Wagen eines mehrgliedrigen Fahrzeugs bezeichnet, wenn das Fahrzeug in der Ebene um eine Kurve fährt. Eine Nickbewegung findet statt, wenn das Fahrzeug über eine Kuppe oder durch eine Senke fährt. Bei einer Wankbewegung verdrehen sich die Wagen relativ zueinander um eine horizontale Längsachse.

Die Angabe, dass die beiden Lenkstangen vor und hinter der Drehachse des Umlenkhebels angeschlagen sind, bezieht sich insbesondere auf einen Normalzustand des Dachgelenks. Normalzustand bedeutet, dass das Fahrzeug auf einer ebenen Fläche steht und die Wagen gerade hintereinander angeordnet sind. Es gibt dann eine senkrechte Ebene, die quer zur Fahrzeug-Längsrichtung ausgerichtet ist und die sich durch den Umlenkhebel und die Drehachse des Umlenkhebels erstreckt. Wenn die Lenkstangen vor und hinter der Drehachse an dem Umlenkhebel angeschlagen sind, so sind die Anlenkpunkte der beiden Lenkstangen an dem Umlenkhebel auf unterschiedlichen Seiten dieser Ebene angeordnet.

Für eine gleichmäßige Kraftübertragung auf den Umlenkhebel ist es von Vorteil, wenn der Abstand zwischen der Drehachse des Umlenkhebels und dem Anlenkpunkt der ersten Lenkstange übereinstimmt mit dem Abstand zwischen der Drehachse des Umlenkhebels und dem Anlenkpunkt der zweiten Lenkstange. Die Anlenkpunkte der beiden Lenkstangen können so angeordnet sein, dass eine Verbindungsgerade zwischen den beiden Anlenkpunkten die Drehachse schneidet.

Die erste Lenkstange kann eine feste Länge haben. Die Verbindung zwischen der ersten Lenkstange und dem Umlenkhebel kann eine gelenkige Verbindung sein. Insbesondere kann die erste Lenkstange relativ zu dem Umlenkhebel um eine Achse schwenkbar sein, die parallel zu der Drehachse des Umlenkhebels ist. Die gelenkige Verbindung kann auch als Kugelgelenk ausgebildet sein, so dass die erste Lenkstange relativ zu dem Umlenkhebel um ihre Längsachse gedreht werden kann. Die zweite Lenkstange sowie die Verbindung zwischen der zweiten Lenkstange und dem Umlenkhebel können entsprechend ausgebildet sein. Der Anlenkpunkt einer Lenkstange liegt auf der Achse, um den die Lenkstange relativ zu dem betreffenden Bauteil schwenkbar ist.

Die Verbindung zwischen der ersten Lenkstange und der ersten Seitenkonsole kann eine gelenkige Verbindung sein. Insbesondere kann die erste Lenkstange relativ zu der ersten Seitenkonsole um eine Achse schwenkbar sein, die parallel zu der Drehachse des Umlenkhebels ist, wenn das mehrgliedrige Fahrzeug im Normalzustand ist. Die gelenkige Verbindung kann auch als Kugelgelenk ausgebildet sein, so dass die erste Lenkstange relativ zu der ersten Seitenkonsole um ihre Längsachse gedreht werden kann. Die Verbindung zwischen der zweiten Lenkstange und der zweiten Seitenkonsole kann entsprechend ausgebildet sein.

Die erste Lenkstange kann eine Länge haben, die größer ist als der seitliche Abstand zwischen der Drehachse des Umlenkhebels und dem Anlenkpunkt der ersten Lenkstange an der ersten Seitenkonsole, wenn das Dachgelenk im Normalzustand ist. Die Angabe seitlicher Abstand bezieht sich auf den Abstand zu einer in Längsrichtung ausgerichteten senkrechten Ebene, die sich durch die Drehachse des Umlenkhebels erstreckt (Längs-Mittelebene des Dachgelenks). Im Normalzustand des Dachgelenks kann der Anlenkpunkt der ersten Lenkstange am Umlenkhebel von der ersten Seitenkonsole aus betrachtet jenseits der Längs-Mittelebene des Gelenks liegen. Die zweite Lenkstange kann eine entsprechende Länge haben. Der Anlenkpunkt der zweiten Lenkstange am Umlenkhebel kann von der zweiten Seitenkonsole aus betrachtet jenseits der Längsmittelebene des Dachgelenks liegen, wenn das Dachgelenk im Normalzustand ist.

Das Dachgelenk kann so gestaltet sein, dass der Anlenkpunkt zwischen der ersten Lenkstange und der ersten Seitenkonsole vor der Drehachse des Umlenkhebels angeordnet ist, wenn das Dachgelenk im Normalzustand ist. Insbesondere kann die Lenkstange im Normalzustand des Dachgelenks einen Winkel zwischen 60° und 120°, vorzugsweise 80° bis 110°, weiter vorzugsweise etwa 90° mit der Längsrichtung des Fahrzeugs einschließen.

Der Anlenkpunkt zwischen der zweiten Lenkstange und der zweiten Seitenkonsole kann hinter der Drehachse des Umlenkhebels angeordnet sein, wenn das Dachgelenk im Normalzustand ist. Insbesondere kann die Lenkstange im Normalzustand des Dachgelenks einen Winkel zwischen 60° und 120°, vorzugsweise 80° bis 110°, weiter vorzugsweise etwa 90° mit der Längsrichtung des Fahrzeugs einschließen. Es kann demnach im Normalzustand die erste Lenkstange in ihrer Gesamtheit vor der Drehachse des Umlenkhebels angeordnet sein und die zweite Lenkstange in ihrer Gesamtheit hinter der Drehachse des Umlenkhebels angeordnet sein. Dabei können die beiden Lenkstangen im Wesentlichen parallel zueinander ausgerichtet sein.

Der seitliche Abstand zwischen der Längs-Mittelebene des Dachgelenks und dem Anlenkpunkt der ersten Lenkstange an der ersten Seitenkonsole kann im Normalzustand des Dachgelenks genauso groß sein wie der seitliche Abstand zwischen der Längs-Mittelebene und dem Anlenkpunkt der zweiten Lenkstange an der zweiten Seitenkonsole.

Für eine stabile Führung des Umlenkhebels kann die Zentralkonsole eine Oberplatte und einer Unterplatte umfassen. Der Umlenkhebel kann zwischen der Oberplatte und der Unterplatte angeordnet sein. Die Drehachse, auf der der Umlenkhebel geführt ist, kann sich zwischen der Oberplatte und der Unterplatte erstrecken und an beiden Platten befestigt sein.

Die Erfindung betrifft außerdem ein Gelenksystem zwischen zwei Wagen eines mehrgliedrigen Fahrzeugs. Das Gelenksystem umfasst ein solches Dachgelenk und eine Kupplung. Die Kupplung kann unterhalb eines für Passagiere bestimmten Durchgangs angeordnet sein. Das Dachgelenk kann oberhalb eines für Passagiere bestimmten Durchgangs angeordnet sein. Die Kupplung kann die beiden Wagen miteinander verbinden und einen zentralen Drehpunkt für Relativbewegungen zwischen den Wagen bilden. Das Gelenksystem kann so gestaltet sein, dass die Kupplung und der Umlenkhebel des Dachgelenks eine gemeinsame Drehachse aufweisen.

Die Erfindung betrifft ferner ein mehrgliedriges Fahrzeug, umfassend einen ersten Wagen und einen zweiten Wagen, wobei der erste Wagen und der zweite Wagen durch ein solches Gelenksystem miteinander verbunden sind. Die Zentralkonsole ist an dem ersten Wagen angebracht, so dass sie in den Zwischenraum zwischen dem ersten Wagen und dem zweiten Wagen vorspringt. Die beiden Seitenkonsolen sind an dem zweiten Wagen angebracht, so dass sie in den Zwischenraum zwischen dem ersten Wagen und dem zweiten Wagen vorspringen.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine Seitenansicht einer Straßenbahn;
- Fig. 2:: eine schematische Ansicht eines erfindungsgemäßen Gelenksystems;
- Fig. 3:: eine Ansicht von oben auf ein erfindungsgemäßes Dachgelenk;
- Fig. 4:: eine vergrößerte Darstellung des Dachgelenks gemäß Fig. 3;
- Fig. 5:: das Dachgelenk aus Fig. 4 in einem anderen Zustand;
- Fig. 6:: das Dachgelenk aus Fig. 4 in noch einem anderen Zustand.

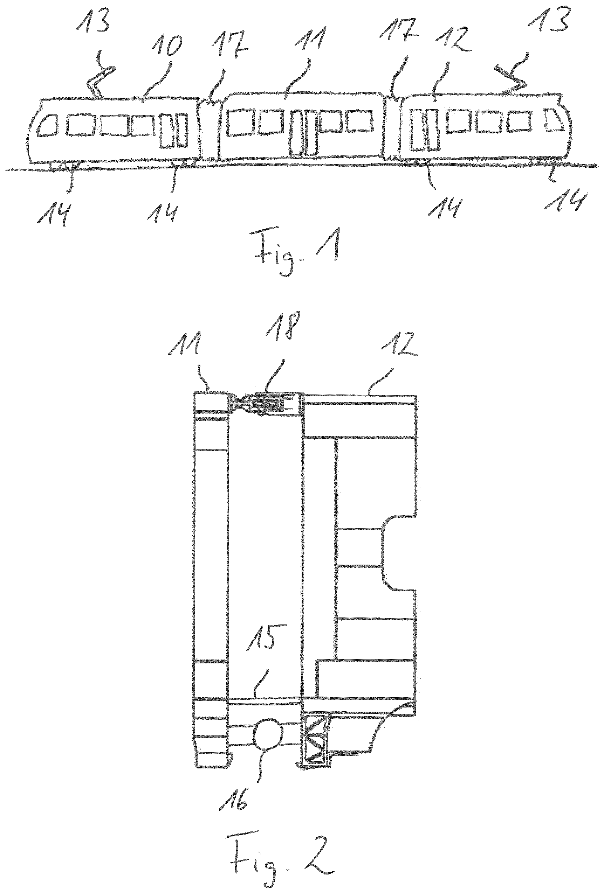

Eine Straßenbahn in Fig. 1 umfasst einen Vorderwagen 10, einen Mittelwagen 11 und einen Hinterwagen 12. Der Vorderwagen 10 und der Hinterwagen 12 sind als Triebwagen ausgebildet, die mit Stromabnehmern 13 elektrische Energie aus einer Oberleitung abgreifen und nicht dargestellten Antriebsmotoren zuführen. Die Antriebsmotoren treiben Räder 14 der Straßenbahn an.

Der Vorderwagen 10 und der Hinterwagen 12 sind jeweils über ein in Fig. 1 nicht dargestelltes Gelenksystem mit dem Mittelwagen 11 verbunden. Der Mittelwagen 11 hat keine Räder, sondern wird über die Gelenksysteme von dem Vorderwagen 10 und dem Hinterwagen 12 getragen. Im Vorderwagen 10 und im Hinterwagen 12 ist der Boden, auf dem die Passagiere stehen, wegen der darunter liegenden Räder 14 in einigem Abstand zum Boden angeordnet. Wenn ein Passagier vom Gehweg aus in den Vorderwagen 10 oder den Hinterwagen 12 einsteigt, muss er einen Höhenunterschied überwinden. Der Boden des Mittelwagens 11 ist im Vergleich zum Boden des Vorderwagens 10 und des Hinterwagens 12 abgesenkt. Ein Passagier kann vom Gehweg aus in den Mittelwagen 11 einsteigen, ohne dass ein nennenswerter Höhenunterschied überwunden werden müsste.

Zwischen den Wagen bestehen Durchgänge, die die Passagiere auch während der Fahrt durchqueren können. Die Durchgänge sind mit Faltenbälgen 17 umgeben, durch die die Passagiere vor Umgebungseinflüssen geschützt werden.

Die beiden Gelenksysteme zwischen den Wagen sind unterschiedlich ausgebildet. Das Gelenksystem zwischen dem Vorderwagen 10 und dem Mittelwagen 11 lässt nur Drehbewegungen und Wankbewegungen zu. Das Gelenksystem zwischen dem Mittelwagen 11 und dem Hinterwagen 12 erlaubt nur Drehbewegungen und Nickbewegungen.

In Fig. 2 ist das Gelenksystem zwischen dem Mittelwagen 11 und dem Hinterwagen 12 in vergrößerter Darstellung gezeigt. Das Gelenksystem umfasst eine Übergangsplattform 15, auf der die Passagiere stehen, wenn sie den Durchgang nutzen. Der Mittelwagen 11 und der Hinterwagen 12 sind über eine unterhalb der Übergangsplattform 15 angeordnete Kupplung 16 miteinander verbunden. Die Kupplung 16, die den Mittelwagen 11 und den Hinterwagen 12 in einem festen Abstand zueinander hält, umfasst einen kugelförmigen Gelenkkopf, der in einer Gelenkschale aufgenommen ist. Der Gelenkkopf kann sich in der Gelenkschale in alle Richtungen drehen, so dass er verschiedene Bewegungen zwischen dem Mittelwagen 11 und dem Hinterwagen 12 zulässt. Insbesondere ermöglicht die Kupplung 16 die erwähnten Drehbewegungen, Nickbewegungen und Wankbewegungen sowie Kombinationen daraus. Für alle Bewegungen bildet die Kupplung 16 den zentralen Drehpunkt.

Das Gelenksystem umfasst ferner ein oberhalb des Durchgangs angeordnetes Dachgelenk 18, durch das die Bewegungsfreiheit der Kupplung 16 eingeschränkt wird. Das Dachgelenk 18 hält den Mittelwagen 11 und den Hinterwagen 12 in Querrichtung betrachtet in einer festen Position relativ zueinander, so dass Wankbewegungen zwischen den beiden Wagen ausgeschlossen sind. Möglich sind hingegen Drehbewegungen und Nickbewegungen. Bei einer Nickbewegung nimmt das Dachgelenk eine Relativbewegung in Längsrichtung auf.

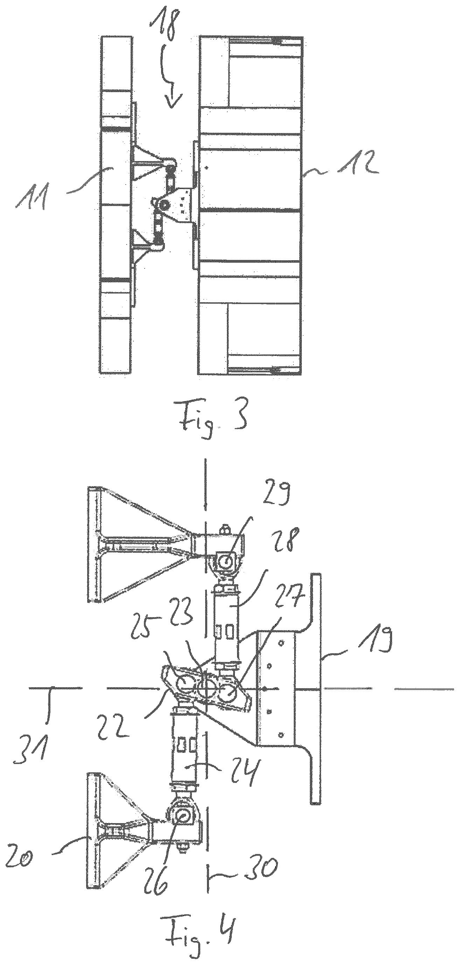

Das Dachgelenk 18 umfasst eine Zentralkonsole 19, die mit dem Hinterwagen 12 verbunden ist, sowie zwei Seitenkonsolen 20, 21, die mit dem Mittelwagen 11 verbunden sind. Zwischen einer Oberplatte und einer Unterplatte der Zentralkonsole 19 ist ein Umlenkhebel 22 um eine Drehachse 23 schwenkbar wird. In der Darstellung gemäß Fig. 4 ist die Oberplatte entfernt, so dass der Umlenkhebel 22 zu sehen ist.

Eine erste Lenkstange 24 erstreckt sich von einem Anlenkpunkt 25 an dem Umlenkhebel 22 bis zu einem Anlenkpunkt 26 an der ersten Seitenkonsole 20. Die erste Lenkstange 24 ist sowohl mit dem Umlenkhebel 22 als auch mit der ersten Seitenkonsole 20 über ein Kugelgelenk verbunden. Die Lenkstange 24 hat eine feste Länge, so dass der Abstand zwischen den Anlenkpunkten 25, 26 im Betrieb des Fahrzeugs konstant gehalten wird.

Eine zweite Lenkstange 28 erstreckt sich von einem Anlenkpunkt 27 an dem Umlenkhebel 22 bis zu einem Anlenkpunkt 29 an der zweiten Seitenkonsole 21. Die zweite Lenkstange 28 ist sowohl mit dem Umlenkhebel 22 als auch mit der zweiten Seitenkonsole 21 über ein Kugelgelenk verbunden. Die Lenkstange 28 hat eine feste Länge, so dass der Abstand zwischen den Anlenkpunkten 27, 29 im Betrieb des Fahrzeugs konstant gehalten wird.

In Fig. 4 ist das Dachgelenk 18 im Normalzustand dargestellt. Die Wagen 10, 11, 12 stehen also wie in Fig. 1 dargestellt auf einer ebenen Fläche und gerade hintereinander. In Fig. 4 ist mit gestrichelter Linie eine senkrechte Ebene 30 angedeutet, die sich in Querrichtung erstreckt und den Umlenkhebel 22 in der Drehachse 23 schneidet. Der Anlenkpunkt 25 der ersten Lenkstange 24 ist vor der Ebene 30 und damit vor der Drehachse 23 angeordnet. Der Anlenkpunkt 27 der zweiten Lenkstange 28 ist hinter der Ebene 30 und damit hinter der Drehachse 23 angeordnet.

Mit gestrichelter Linie ist in Fig. 4 außerdem die senkrecht ausgerichtete Längs-Mittelebene 31 des Dachgelenks 18 angedeutet. Im Normalzustand des Dachgelenks ist der seitliche Abstand zwischen dem Anlenkpunkt 26 der ersten Seitenkonsole 20 und der Längs-Mittelebene 31 kleiner als die Länge der ersten Lenkstange 24. Die erste Lenkstange 24 ragt im Normalzustand des Dachgelenks über die Längs-Mittelebene 31 hinaus. Entsprechend ist der seitliche Abstand zwischen dem Anlenkpunkt 29 der zweiten Seitenkonsole 21 und der Längs-Mittelebene 31 kleiner als die Länge der zweiten Lenkstange 28. Die zweite Lenkstange 28 ragt im Normalzustand des Dachgelenks von der anderen Seite kommend über die Längs-Mittelebene 31 hinaus.

Die erste Seitenkonsole 20 hat in Längsrichtung betrachtet eine geringere Ausdehnung als die zweite Seitenkonsole 21. Beide Lenkstangen 24, 28 erstrecken sich deswegen im Wesentlichen in Querrichtung des Fahrzeugs. Die erste Lenkstange 24 ist in ihrer Gesamtheit vor der Ebene 30 und damit vor der Drehachse 23 angeordnet. Die zweite Lenkstange 28 ist in ihrer Gesamtheit hinter der Ebene 30 und damit hinter der Drehachse 23 angeordnet.

Die Drehachse 23 des Umlenkhebels 22 entspricht der Drehachse der Kupplung 16, über die die Wagen 11, 12 miteinander verbunden sind. Wenn das Gelenkfahrzeug um eine Kurve fährt, knickt das Dachgelenk 18 um die Drehachse 23 in seitlicher Richtung ein.

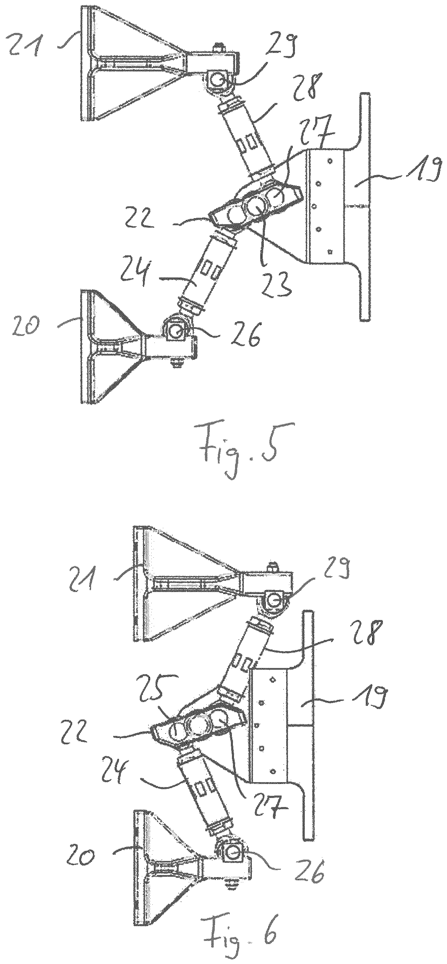

Die Fig. 5 zeigt das Dachgelenk 18 bei einer Nickbewegung. Der Mittelwagen 11 und der Hinterwagen 12 haben im Dachbereich einen größeren Abstand als im Normalzustand. Ein größerer Abstand als im Normalzustand stellt sich ein, wenn das Gelenkfahrzeug über eine Kuppe fährt. Der vergrößerte Abstand zwischen den Seitenkonsolen 20, 21 und der Zentralkonsole 19 wird dadurch aufgenommen, dass die Lenkstangen 24, 28 sich ausgehend von den Seitenkonsolen 20, 21 schräg nach hinten erstrecken. Dies ist ohne Längenänderung der Lenkstangen 24, 28 möglich, weil gleichzeitig der Umlenkhebel 22 entgegen dem Uhrzeigersinn gedreht wird, so dass die Anlenkpunkte 25, 27 nachgeführt werden.

In Fig. 6 ist ein Zustand des Dachgelenks 18 gezeigt, wie er sich einstellt, wenn das Gelenkfahrzeug durch eine Senke fährt. Bei einer solchen Nickbewegung verringert sich der Abstand im Dachbereich zwischen dem Mittelwagen 11 und dem Hinterwagen 12. Der verringerte Abstand zwischen den Seitenkonsolen 20, 21 und der Zentralkonsole 19 wird dadurch aufgenommen, dass die Lenkstangen 24, 28 sich ausgehend von den Seitenkonsolen 20, 21 schräg nach vorne erstrecken. Der Umlenkhebel 22 wird ausgehend vom Normalzustand entgegen dem Uhrzeigersinn gedreht, so dass die Anlenkpunkte 25, 27 nachgeführt werden.

Gegenüber in Querrichtung wirkenden Kräften ist das Dachgelenk 18 starr. Da die Lenkstangen 24, 28 auf unterschiedlichen Seiten der Drehachse 23 an dem Umlenkhebel 22 angreifen, heben die Drehmomente sich gegenseitig auf, so dass der Umlenkhebel 22 in seiner Position bleibt und die Seitenkonsolen 20, 21 sich nicht relativ zu der Zentralkonsole 19 bewegen.

## Patentansprüche

1. Dachgelenk für ein mehrgliedriges Fahrzeug mit einer Zentralkonsole (19) zum Befestigen an einem ersten Wagen (12), mit zwei Seitenkonsolen (20, 21) zum Befestigen an einem zweiten Wagen (11), mit einem Umlenkhebel (22), der an der Zentralkonsole (19) um eine Drehachse (23) schwenkbar gelagert ist, mit einer ersten Lenkstange (24) zwischen dem Umlenkhebel (22) und der ersten Seitenkonsole (20), mit einer zweiten Lenkstange (28) zwischen dem Umlenkhebel (22) und der zweiten Seitenkonsole (21), wobei die erste Lenkstange (24) vor der Drehachse (23) an dem Umlenkhebel (22) angeschlagen ist und wobei die zweite Lenkstange (28) hinter der Drehachse (23) an dem Umlenkhebel (22) angeschlagen ist.

2. Dachgelenk nach Anspruch 1, **dadurch gekennzeichnet, dass** der Abstand zwischen der Drehachse (23) des Umlenkhebels (22) und dem Anlenkpunkt (25) der ersten Lenkstange (24) übereinstimmt mit dem Abstand zwischen der Drehachse (23) des Umlenkhebels (22) und dem Anlenkpunkt (27) der zweiten Lenkstange (28).

3. Dachgelenk nach Anspruch 1 oder 2, **dadurch gekennzeichnet, dass** die erste Lenkstange (24) und die zweite Lenkstange (28) eine feste Länge haben.

4. Dachgelenk nach einem der Ansprüche 1 bis 3, **dadurch gekennzeichnet, dass** die Verbindung zwischen den Lenkstangen (24, 28) und dem Umlenkhebel (22) und/oder die Verbindung zwischen den Lenkstangen (24, 28) und den Seitenkonsolen (20, 21) als Kugelgelenk ausgebildet ist.

5. Dachgelenk nach einem der Ansprüche 1 bis 4, **dadurch gekennzeichnet, dass** im Normalzustand der Anlenkpunkt (25) der ersten Lenkstange (24) an dem Umlenkhebel (22) von der ersten Seitenkonsole (20) aus betrachtet jenseits der Längs-Mittelebene (31) des Dachgelenks angeordnet ist.

6. Dachgelenk nach einem der Ansprüche 1 bis 5, **dadurch gekennzeichnet, dass** im Normalzustand der Anlenkpunkt (27) der zweiten Lenkstange (28) an dem Umlenkhebel (22) von der zweiten Seitenkonsole (21) aus betrachtet jenseits der Längs-Mittelebene (31) des Dachgelenks angeordnet ist.

7. Dachgelenk nach einem der Ansprüche 1 bis 6, **dadurch gekennzeichnet, dass** im Normalzustand der Anlenkpunkt (26) zwischen der ersten Lenkstange (24) und der ersten Seitenkonsole (20) vor der Drehachse (23) des Umlenkhebels (22) angeordnet ist.

8. Dachgelenk nach einem der Ansprüche 1 bis 7, **dadurch gekennzeichnet, dass** im Normalzustand der Anlenkpunkt (29) zwischen der zweiten Lenkstange (28) und der zweiten Seitenkonsole (21) vor der Drehachse (23) des Umlenkhebels (22) angeordnet ist.

9. Dachgelenk nach einem der Ansprüche 1 bis 8, **dadurch gekennzeichnet, dass** der seitliche Abstand zwischen der Längs-Mittelebene (31) des Dachgelenks und dem Anlenkpunkt (26) der ersten Lenkstange (24) an der ersten Seitenkonsole (20) im Normalzustand genauso groß ist wie der seitliche Abstand zwischen der Längs-Mittelebene (31) und dem Anlenkpunkt (29) der zweiten Lenkstange (28) an der zweiten Seitenkonsole (21).

10. Gelenksystem zwischen zwei Wagen eines mehrgliedrigen Fahrzeugs, umfassend eine Kupplung (16) zwischen den Wagen sowie ein Dachgelenk (18) nach einem der Ansprüche 1 bis 9.

11. Mehrgliedriges Fahrzeug, umfassend einen ersten Wagen (12) und einen zweiten Wagen (11), wobei der erste Wagen (12) und der zweite Wagen (11) durch ein Gelenksystem nach Anspruch 10 miteinander verbunden sind.
